(19) Europäisches Patentamt
European Patent Office
Office européen des brevets

(11) **EP 4 647 910 A1**

(12) **EUROPEAN PATENT APPLICATION**

(43) Date of publication:
**12.11.2025 Bulletin 2025/46**

(21) Application number: **25161776.7**

(22) Date of filing: **05.03.2025**

(51) International Patent Classification (IPC):
**G06F 9/48** (2006.01)    **G06F 9/50** (2006.01)

(52) Cooperative Patent Classification (CPC):
**G06F 9/5066; G06F 9/4881**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.05.2024 US 202418657980**

(71) Applicant: **The Boeing Company**
**Arlington, VA 22202 (US)**

(72) Inventors:
• **Thompson, Richard Joel**
  **Arlington, 22202 (US)**
• **Nguyen, Nam Hoang**
  **Arlington, 22202 (US)**
• **Nishimura, Hiromichi**
  **Arlington, 22202 (US)**
• **Kagele, Marna M.**
  **Arlington, 22202 (US)**

(74) Representative: **Witte, Weller & Partner**
**Patentanwälte mbB**
**Postfach 10 54 62**
**70047 Stuttgart (DE)**

(54) **HYBRID-COMPUTING RESOURCE OPTIMIZATION MODEL**

(57)    Network optimization for arranging computational sub-tasks in a hybrid-computing environment is provided. The method comprises receiving input of a network of nodes and edges representing computational processes and their constituent information, wherein the nodes are grouped according to whether the nodes use classical computing resources or quantum computing resources. The method generates workflow constraints, scheduling constraints and computing resource assignment constraints. The method generates an objective function. An optimization problem is solved according to the objective function and all said constraints. The solution determines a best computational objective achieved, a selected computational workflow through the nodes, compute job scheduling, and assignment of the computational processes among the classical computing resources and quantum computing resources. The computational workflow is then executed to achieve the best computational objective according to the computed job scheduling and assignment of computational processes among the classical computing resources and quantum computing resources.

FIG. 4

400

START

402 — RECEIVE INPUT OF A NETWORK OF NODES AND EDGES REPRESENTING COMPUTATIONAL PROCESSES AND THEIR CONSTITUENT INFORMATION, WHEREIN THE NODES ARE GROUPED ACCORDING TO WHETHER THE NODES USE CLASSICAL COMPUTING RESOURCES OR QUANTUM COMPUTING RESOURCES

404 — GENERATE WORKFLOW CONSTRAINTS

406 — GENERATE SCHEDULING CONSTRAINTS

408 — GENERATE COMPUTING RESOURCE ASSIGNMENT CONSTRAINTS

410 — GENERATE AN OBJECTIVE FUNCTION

412 — SOLVE AN OPTIMIZATION PROBLEM ACCORDING TO THE OBJECTIVE FUNCTION AND ALL SAID CONSTRAINTS, WHEREIN THE SOLUTION DETERMINES A BEST COMPUTATIONAL OBJECTIVE ACHIEVED, A SELECTED COMPUTATIONAL WORKFLOW THROUGH THE NODES, COMPUTE JOB SCHEDULING, AND ASSIGNMENT OF THE COMPUTATIONAL PROCESSES AMONG THE CLASSICAL COMPUTING RESOURCES AND QUANTUM COMPUTING RESOURCES

414 — EXECUTE THE COMPUTATIONAL WORKFLOW TO ACHIEVE THE BEST COMPUTATIONAL OBJECTIVE ACCORDING TO THE COMPUTED JOB SCHEDULING AND ASSIGNMENT OF COMPUTATIONAL PROCESSES AMONG THE CLASSICAL COMPUTING RESOURCES AND QUANTUM COMPUTING RESOURCES

END

**EP 4 647 910 A1**

# Description

## BACKGROUND INFORMATION

### 1. Field:

The present disclosure relates generally to computing systems, more specifically, to an automated method for determining an optimal arrangement of sub-processes in a computational task.

### 2. Background:

New technologies such as quantum computing, optical computing, neuromorphic computing, artificial intelligence and machine learning (AI/ML), general-purpose graphics processing units (GPGPUs), high-performance computing (HPC) and others are emerging and are in various states of maturity. These different technologies could offer potential speedups and advantages for particular classes of problems as compared to traditional computational approaches. For example, quantum computing could achieve an exponential speedup over classical high-performance computing for ground-state energy calculations of atoms and molecules, and for integer factorization of large numbers. However, current hardware for some of these classes of technologies is very limited; for example, current quantum computers are classified as Noisy, Intermediate-Scale Quantum (NISQ) devices, which in addition to being susceptible to significant noise issues are also very limited quantum memory sizes. Therefore, determining how to compare classical and hybrid-computing computational tasks, determining performance bottlenecks, and finding how to best utilize precious compute resources is a difficult problem that must be contended with during the adoption of these new technologies.

Therefore, it would be desirable to have a method and apparatus that take into account at least some of the issues discussed above, as well as other possible issues.

## SUMMARY

An illustrative embodiment provides a computer-implemented method of network optimization for arranging computational sub-tasks in a hybrid-computing environment. The method comprises receiving input of a network of nodes and edges representing computational processes and their constituent information, wherein the nodes are grouped according to whether the nodes use classical computing resources or quantum computing resources. The method generates workflow constraints, scheduling constraints and computing resource assignment constraints. The method generates an objective function. An optimization problem is solved according to the objective function and all said constraints. The solution determines a best computational objective achieved, a selected computational workflow through the nodes, compute job scheduling, and assignment of the computational processes among the classical computing resources and quantum computing resources. The computational workflow is then executed to achieve the best computational objective according to the computed job scheduling and assignment of computational processes among the classical computing resources and quantum computing resources.

Another illustrative embodiment provides a system for network optimization for arranging computational sub-tasks in a hybrid-computing environment. The system comprises a storage device that stores program instructions and one or more processors operably connected to the storage device and configured to execute the program instructions to cause the system to: receive input of a network of nodes and edges representing computational processes and their constituent information, wherein the nodes are grouped according to whether the nodes use classical computing resources or quantum computing resources; generate workflow constraints; generate scheduling constraints; generate computing resource assignment constraints; generate an objective function; solve an optimization problem according to the objective function and all said constraints, wherein the solution determines a best computational objective achieved, a selected computational workflow through the nodes, compute job scheduling, and assignment of the computational processes among the classical computing resources and quantum computing resources; and execute the computational workflow to achieve the best computational objective according to the computed job scheduling and assignment of computational processes among the classical computing resources and quantum computing resources.

Another illustrative embodiment provides a computer program product for network optimization for arranging computational sub-tasks in a hybrid-computing environment. The computer program product comprises a computer-readable storage medium having program instructions embodied thereon to perform the steps of: receiving input of a network of nodes and edges representing computational processes and their constituent information, wherein the nodes are grouped according to whether the nodes use classical computing resources or quantum computing resources; generating workflow constraints; generating scheduling constraints; generating computing resource assignment constraints; generating an objective function; solving an optimization problem according to the objective function and all said constraints, wherein the solution determines a best computational objective achieved, a selected computational workflow through the nodes, compute job scheduling, and assignment of the computational processes among the classical computing resources and quantum computing resources; and executing the computational workflow to achieve the best computational objective according to the computed job scheduling and assignment of computational processes among the classical computing resources and quantum computing resources.

The features and functions can be achieved independently in various embodiments of the present disclosure or may be combined in yet other embodiments in which further details can be seen with reference to the following description and drawings.

## BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

Figure 1 depicts a block diagram illustrating a hybrid-computing resource optimization system in accordance with an illustrative embodiment;
Figure 2 depicts a block diagram of a network optimization solution in accordance with an illustrative embodiment;
Figure 3 depicts a directed graph network for a computational process in accordance with an illustrative embodiment;
Figure 4 depicts a flow diagram illustrating a process for network optimization for arranging computational sub-tasks in a hybrid-computing environment; and
Figure 5 depicts a block diagram of a data processing system in accordance with an illustrative embodiment.

## DETAILED DESCRIPTION

The illustrative embodiments recognize and take into account one or more different considerations. The illustrative embodiments recognize and take into account that hybrid arrangements of classical and quantum computing resources have been identified as a means of leveraging the best capabilities of one resource versus another.

The illustrative embodiments also recognize and take into account that current hybrid computational approaches are devised by hand, usually by researchers exploring the use and adoption of new hardware or new computational sub-processes. Hybrid classical/quantum algorithms have been successfully proposed in the literature, but their discovery was performed through a trial-and-error research process. As hardware continues to change and improve, the best available hybrid approach will change as well.

The illustrative embodiments also recognize and take into account that identification of migration from one computing approach to another often relies on heavy benchmarking and comparison of the different methods available. This does not provide a quantitative estimate of when a transition should occur or why, but merely provides a binary comparison outcome based on the benchmark used.

The illustrative embodiments provide a method for determining a best arrangement of computational sub-processes to accomplish a larger computational task. The sub-processes may use different computing resources such as classical and quantum computing, which can be combined into an optimal hybrid-computation approach to solving problems.

The illustrative embodiments determine the optimal ordered arrangement of steps for a computational process, given a set of potential sub-processes. The sub-processes are each characterized by a set of required inputs and a set of produced outputs, as well as computational time required, the error rates associated with the sub-process and the amount of resources required. The illustrative embodiments can be applied to any hybrid computing processes such as hybrid classical/quantum computing, analog/digital computing and may include sub-processes such as high-performance computing, FPGA, neuromorphic computing, DNA or chemical computing, optical computing, or any future emerging form of computing technology.

The illustrative embodiments can also be used to study how the optimal solution changes with changing available resources or error rates. For example, the process could be run multiple times with an increasing amount of quantum resources allowed at each run. This approach may reveal at what point a transition from one form of computing to another might be most beneficial for minimizing computational time, minimizing error associated with the overall computation, or maximizing resource usage. For example, this process would help reveal at what point to migrate from a classical or hybrid classical/quantum approach to a fully quantum approach. The migration may be prompted by the fact that a computational speedup using the new approach is available and/or that the error rate associated with the new approach is at least the same or better.

The illustrative embodiments also provide simultaneous computational task determination, resource assignment, and job scheduling of the optimization problem.

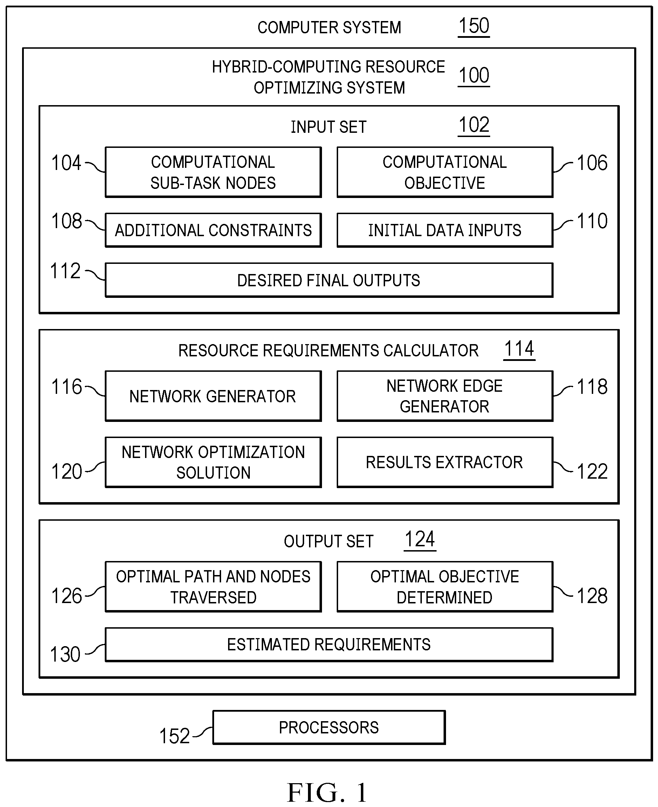

Turning now to Figure 1, an illustration of a block diagram of a hybrid-computing resource optimization system is depicted in accordance with an illustrative embodiment. Hybrid-computing resource optimizing system 100 comprises input set 102, resource requirements calculator 114, and output set 124.

Input set 102 includes a set of computational sub-task nodes 104 representing potential components of a computational process. Each node within computational sub-task nodes 104 may include a representation of the resource requirements, time requirement, required input set, produced output set, and error rates for that respective sub-task. Input set 102 also comprises computational objective **106** for a computational process such as, e.g., minimize computational time, minimize resources required, maximize accuracy/minimize error, maximize resource usage, or any combination thereof. Input set **102** may include optional user-provided constraints **108** such as, e.g., specific nodes cannot exceed resource usage larger than a specified maximum resources available, error of total computation cannot exceed a maximum acceptable error bound, etc. Input set **102** includes initial data inputs **110** and the desired final outputs **112** produced by the computational process based on the initial data inputs **110.**

Resource requirements calculator **114** comprises network generator **116,** which generates a network representation of the provided computation sub-task nodes **104** and their constituent information. Network edge generator **118** generates edge connections between nodes in the network produced by network generator **116** wherein two nodes, A and B, are connected by a directed edge from A to B if the produced outputs of node A can serve as the required inputs to node B.

Network optimization solution **120** solves an optimization to determine a best path through the directed edge network according to the computational objective **106.** A starting node (or set of starting nodes) is identified, which is any node in the network whose required inputs are identical to the initial data inputs **110** provided in input set **102.** A final node (or set of final nodes) is identified, which is any node in the network whose final outputs are identical to the desired final outputs **112** provided in input set **102.** If there are multiple starting/ending nodes, multiple network optimization problems can be generated and solved either sequentially or in parallel to determine the full amount. Network problems (spanning all starting/ending nodes) are solved for the computational objective **106** subject to any additional constraints **108** supplied. The solution may implement different approaches such as, e.g., shortest-path, lowest-cost, network flow, decision tree, or Steiner tree.

If more than one network instance was solved, objectives are compared to determine the best solution.

Results extractor **122** receives the best network solution from **120.** Results extractor **122** post-processes data from the resulting best solution to produce output set **124.**

Output set **124** includes the actual optimal path determined and nodes traversed **126** through the subprocesses to achieve the computational process result and the objective value determined **128.** Output set **124** may also comprise estimated requirements **130** such as, e.g., total error expected in the solution, total resources required, total computational time to solve the problem, etc.

Hybrid-computing resource optimizing system **100** can be implemented in software, hardware, firmware, or a combination thereof. When software is used, the operations performed by hybrid-computing resource optimizing system **100** can be implemented in program code configured to run on hardware, such as a processor unit. When firmware is used, the operations performed by hybrid-computing resource optimizing system **100** can be implemented in program code and data and stored in persistent memory to run on a processor unit. When hardware is employed, the hardware may include circuits that operate to perform the operations in hybrid-computing resource optimizing system **100.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

These components for hybrid-computing resource optimizing system **100** can be located in computer system **150,** which is a physical hardware system and includes one or more data processing systems. When more than one data processing system is present in computer system **150,** those data processing systems are in communication with each other using a communications medium. The communications medium can be a network. The data processing systems can be selected from at least one of a computer, a server computer, a tablet computer, or some other suitable data processing system.

For example, hybrid-computing resource optimizing system **100** can run on one or more processors **152** in computer system **150.** As used herein, a processor is a hardware device and is comprised of hardware circuits such as those on an integrated circuit that respond and process instructions and program code that operate a computer. When processors **152** execute instructions for a process, one or more processors can be on the same computer or on different computers in computer system **150.** In other words, the process can be distributed between processors **152** on the same or different computers in computer system **150.** Further, one or more processors **152** can be of the same type or different types of processors **152.** For example, one or more processors **152** can be selected from at least one of a single core processor, a dual-core processor, a multiprocessor core, a general-purpose central processing unit (CPU), a graphics processing unit (GPU), a quantum processing unit (QPU), tensor processing unit, a digital signal processor (DSP), field programmable gate array (FPGA), neuromorphic processor, or some other type of processor.

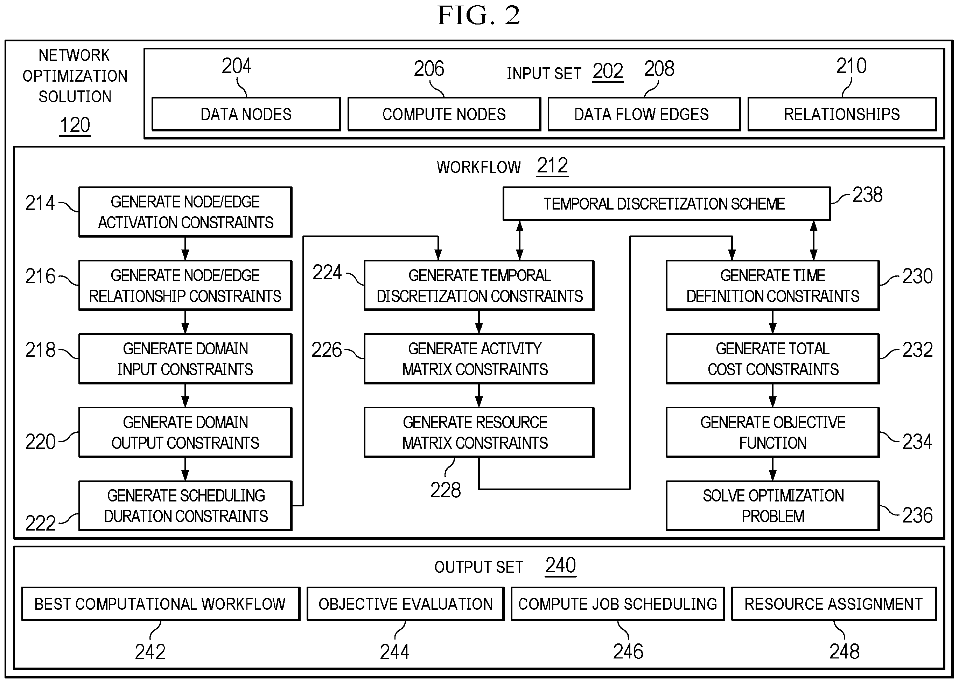

**Figure 2** depicts a block diagram of a network optimization solution in accordance with an illustrative embodiment. **Figure 2** illustrates an example implementation of network optimization solution **120** in **Figure 1** which takes as input a set of nodes and edges representing the graph network for the data and computational task elements and provides an optimally determined workflow selected through the available computational tasks with respect to the user-selected objective (e.g., to minimize compute time, minimize result error, etc.).

Network optimization solution **120** uses an input set **202** comprising data nodes **204,** compute nodes **206,** data flow edges **208,** and relationships **210.** Input set **202** represents the nodes and edges of the graph representation of the computational tasks in question. These input elements are provided by network generator **116** and network edge generator **118 in Figure 1.**

The data nodes **204** represent discrete pieces or elements of data. The compute nodes **206** indicate tasks that can be performed on the data nodes to produce new data nodes. For example, a matrix and a matrix inverse would be two different data nodes. An example of compute nodes would be matrix inversion algorithms such as lower-upper (LU) decomposition or singular values decomposition (SVD) (which would be two different compute nodes). In the graph, LU and SVD would be compute nodes. Edges for these nodes are drawn from the matrix data element to the matrix inverse data element, indicating that these compute nodes consume a matrix and produce an inverse.

The relationships **210** define what relations exist between the different data nodes **204** and compute nodes **206.** The most common relationship is a data dependency relationship. For example, a matrix inverse algorithm requires a specific data element. Another example is a data element that is produced by a compute process. There can potentially be other such relationships such as a compute process that requires at least one of a subset of data elements. Another example is an entity-relationship diagram from which the graph network is constructed. Other possible relationships include data-data and compute-compute (e.g., a data element is a sub-component of a larger data element), etc. Some examples of relationships that could be accommodated in this process include:

- Any $n$ data elements of set $\{d_1, d_2, d_3, ...\}$ is required for this process to proceed.
- All $n$ data elements of set $\{d_1, d_2, d_3, ...\}$ is required for this process to proceed.
- More complicated nesting of sets comprised of the above two relationship types.

These relationships allow the user to express much more complex and nuanced data relationships, such as being able to specify that a compute node requires "both $x$ and $y$, but also only one of either $a$ and $b$" sorts of requirements for data inputs.

Given this information in the input set **202,** a series of linear steps are performed by workflow **212** to generate the constraint equations and objective function comprising the integer optimization problem to be solved.

Generate node/edge activation constraints **214** generates two equations per node (per data element and per process task) in the network that ensure if a process task is chosen as part of a workflow, the corollary input data elements and output data elements are also activated as part of the workflow.

Generate node/edge relationship constraints **216** generates a constraint equation for each node in the network. This constraint equation ensures that an edge $E$ connecting data elements $v_1$ and $v_2$ is activated in a consistent manner, meaning that if one of the data elements, $v_1$ or $v_2$, gets activated, then the corresponding edge also gets activated.

Generate domain input constraints **218** generates a set of equations per required data elements specified by the user. These constraints ensure that the user's specifications of data elements that are available are respected. For example, if a user specifies a data element $v$ representing a measured value known at the start of a process (based on knowledge of the system), this constraint ensures that this data element is true when starting the optimization. Alternatively, this goal can also be achieved by assigning the corresponding data element variable $x_v = 1$ at the start of the optimization.

Generate domain output constraints **220** generates a set of equations per desired data element(s) that the user wants the process to discover. These constraints ensure that the target end goal of the optimized workflow process achieve the target desired data elements that the user wants to know. For example, if the user wants a final matrix inverse or matrix product state, then the corresponding variable $x_v$ would be held required to be 1 by the end of the optimization process. Alternately, the variable $x_v = 1$ can be directly assigned at the start of the optimization.

Generate schedule duration constraints **222** generates a set of constraint equations per compute node in the network. These constraint equations represent that the time duration elapsed between the start and the end of each process matches the expected time duration for that process, plus a possible scheduling delay. The scheduling delay could be zero (indicating no delay) but may need to be greater than zero if inadequate resources are available to accommodate starting the process at the earliest possible time. The scheduling delay time would be included as a penalty in the objective function, which directs the optimizer to minimize these delays.

The time duration $(\Delta t)_k$ is a function of which machine is assigned to the process in question, i.e., the assigned machine's hardware qualities. For example, if a matrix inversion process requires *n* FLOPS (floating-point operations per second), then the time duration $(\Delta t)_k$ for this process would be dependent on the machine hardware assigned, $(\Delta t)_k = n/f$, where *f* is the FLOPS rate (related to the clock frequency) of the assigned machine. This might mean that supplemental equations are needed to accommodate the FLOPS.

Generate temporal discretization constraints **224** generates a set of equations per node and per timestep that guarantee events occurring over time throughout the workflow line up and are meaningful (e.g., a process's start time matches the discretized time at which the process is started, and correspondingly for its termination, with or without delay). The number of timesteps is prerequisite to this approach, and the user specifies a temporal discretization model that fashions this value. One embodiment can represent time as a uniformly discretized set of points in time, where time is indicated by a fixed global timestep, $(\Delta t)_G$, and the time at any point in the workflow process is represented by $t = i \cdot (\Delta t)_G$. This approach can be changed for different cases of interest. For example, an adaptive, non-uniform time discretization could be introduced.

Generate activity matrix constraints **226** generates equations for each node and per machine available that guarantee the activity of the machines matches in time to the startings and endings of various processes that are assigned to the machines.

The scheduling and resource assignments represented by generate schedule duration constraints 222, generate temporal discretization constraints **224,** and generate activity matrix constraints **226** can be optionally omitted from workflow **212**. While including the scheduling and resource assignment will generally improve the solution quality and provide additional information, it could also increase the computational intensity of the optimization problem. Additionally, there may be scenarios wherein the user does not yet need to know the actual scheduling and/or assignment of resources.

Generate resource matrix constraints **228** generates equations per timestep, per machine, per resource type that insist the resources consumed by various machines running at various times are within the equipped resources on the machines. For example, a quantum computer with 25 qubits could not support running a quantum circuit requiring 50 qubits. This constraint also restricts types as well, in the sense that a quantum computer could not be selected to support a GPU process.

Generate time definition constraints **230** is related to generate temporal discretization constraints **224** and generates equations to represent the passage of time. As mentioned above, the time discretization might be uniform, but any kind of temporal discretization can be supported.

Temporal discretization scheme **238** supports both generate temporal discretization constraints **224** and generate time definition constraints **230.** The temporal discretization scheme **238** represents the approach being used to represent passage of time in the workflow process. In addition to uniform discretization of time, the illustrative embodiments can accommodate any kind of representation, such as, e.g., an adaptive scheme, a non-uniform representation, a functional or pre-scheduled form, etc.

Generate total cost constraints **232** generates a set of equations which represent the cost of using each resource by each process. As used herein, "cost" means a generic cost, rather than a specific monetary value (although it can also include monetary cost). Cost could be the amount of time, the amount of power expended, the amount of error incurred, or a combination of one or more of these factors. These equations capture the effect of accumulating the cost across the workflow chosen.

Users might also include any additional constraints they want to impose on the costs. For example, they could specify a blanket statement that the power required by the workflow cannot exceed some specific wattage (maybe representing a facility power supply restriction). Each of these constraints would be added per the user's specifications.

Generally, but not necessarily, these costs add across the workflow processes chosen. However, costs might also multiply across the workflow processes chosen. An example of adding costs would be the total time duration to calculate something (each process adds a fixed amount of time before that data element can be reached), or monetary cost of using processor resources (adding more processors might incur a linearly increasing cost per processor). An example of a multiplying cost would be error (the probability of failure is a product across all gate operations in a circuit, for example).

Generate objective function **234** generates the expression that is to be minimized or maximized by the optimizer. The expression might be the "computational makespan", the total amount of wall time elapsed for the fastest possible workflow approach to solving the problem. Wall time refers to the difference in a system clock's values before starting and after completing some process. This is in contrast to other measures of time, e.g., CPU time, which only measures active time of a process actually active on the processor (typically a much smaller number than wall time).

The expression can also be "total runtime", or, equivalently "CPU time", which is different from the computational makespan in that the runtime accounts for time spent on each resource rather than the wall time elapsed for the process alone. For example, if a process takes one (1) second and is parallelized across four (4) processors so that it reduces to only needing ¼ seconds to complete, the makespan would be ¼ seconds, but the runtime would be $\frac{1}{4} \cdot 4 = 1$ second. Runtime is more useful for computing expenses of parallelized processes (estimating the cost of using a high-performance computing cluster, for example, is based on CPU time and not wall time).

Solve optimization problem **236** can be performed by any algorithm or piece of software that will calculate a solution to the above generated system of equations for the constraints, variables, and expressions. This could be a mixed-integer optimizer using branch-and-bound, branch-and-cut, branch-and-price, etc., or could be a heuristic or metaheuristic algorithm such as simulated annealing, particle swarm optimization, genetic algorithms, etc., to iteratively determine a numerical solution to the thus assembled equations. The illustrative embodiments are agnostic to the methodology chosen for this step. To solve the optimization problem, the algorithm performs iterative calculations that improve the solution as the algorithm explores the solution space. The problem is considered "solved" when a stopping criterion has been reached on one of these iterations. This criterion could be convergence detection in the solution, a fixed number of iterations or a fixed amount of time elapsed, a size of the solution space explored, a best possible objective value achieved for a found solution, etc. The available stopping criteria possible depends on the algorithm in question.

After solving the optimization problem, the output set **240** comprises the best computational workflow **242** selected, the best objective evaluation **244** achieved, compute job scheduling **246,** and resource assignment **248,** which are extracted by the results extractor **122** in **Figure 1.** Results extractor **122** extracts the solution and converts it back into the form of the workflow processes but also extracts and converts the time scheduling of the various machines (this could include generating the batch scheduling jobs for a large heterogeneous computing system) and also records and shows the resource usage (e.g., as a Gantt chart output).

A generic computational process can be broken into a series of subtasks, $T_i = \{R_i, t_i, S_i, U_i, E_i\}$, where a single subtask $T_i$ is comprised of:

- a required set of resources, $R_i$
- an amount of time or computational intensity, $t_i$, which might be a function of the assigned hardware (i.e., FLOPS)
- a required set of inputs, $S_i$
- a produced set of outputs, $U_i$
- potentially a representation of error associated with the outputs, $E_i$

There will generally be a known starting set of data, $G$, some desired final product of data, $H$, and a selected ordering of processes to complete the subtasks. The resources, $R_i$, and the amount of time or intensity, $t_i$, may be scalar (as in the amount of bits/qubits and/or processors required for subtask $T_i$) or could be more functional (such as two functions $R_i(n)$ and $t_i(n)$ that describe the scaling of the resources and time required with a growing problem size, $n$).

Error associated with the outputs, $E_i$, could

similarly be zero for an exact process, a scalar value, or a Gaussian distribution, could be a noise model, or could be a function of a problem size or problem complexity, $E_i(n)$.

The illustrative embodiments optimize the ordering of computational sub-tasks to complete the full computational process, while using the smallest amount of computational time, resources, or final output error (or some combination of these). Additionally, there may be constraints present on the problem such as the ordering of the sub-tasks to create appropriate outputs that become inputs for the following sub-tasks. There may be additional constraints applied, such as available resource limits or maximum acceptable error limits on particular sub-tasks. The error propagation from one sub-task to the next does not need to be restricted to a linear sum but may include more accurate nonlinearities of the propagation.

An example problem of interest to which the illustrative embodiments may be applied is the computation of corrosion rates and modeling of micro-scale interactions of aerospace materials in harsh environments and studying the usage of classical and quantum computer resources to solve this problem.

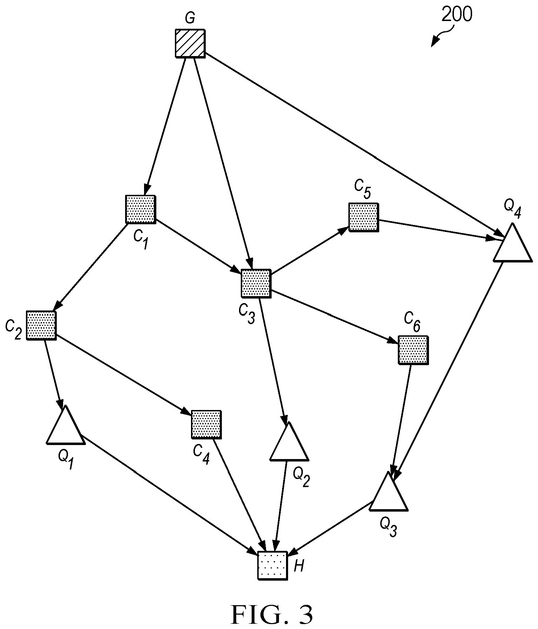

**Figure 3** depicts a directed graph network for a computational process in accordance with an illustrative embodiment. Directed graph network **300** may be an example of a network created by network generator **116** and network edge generator **118 in Figure 1.**

The computational process can be represented as a graph where nodes represent sub-task execution using a specific process. Each node in the graph, $n_i$, represents a potential computational sub-task, $T_i$, that could be executed en route to completing the computational process from initial starting set of data, $G$, to a desired final set of data, $H$. In the present example, the computational sub-task nodes comprise classical nodes $C_1, C_2, C_3, C_4, C_5, C_6$ and quantum nodes $Q_1, Q_2, Q_3, Q_4$. The classical nodes, $C_i$, represent any classical procedures that can be used. The classical approaches, $C_i$, may include methods such as discrete Fourier transform (DFT), kinetic Monte Carlo (kMC), and any pre-processing or post-processing steps that could be performed. The quantum nodes, $Q_i$, represent any quantum processes that can be run.

The illustrative embodiments seek to find the "shortest path" (lowest cost) across the directed graph network **200** starting from any node requiring inputs equal to the initial starting data inputs, $S_0 = G$, to any node that produces the final desired output data $U_N = H$. Additional constraints ensure that edges between nodes are only allowed to exist if the outputs of one node may feed into the inputs of the next.

This process may be extended beyond just the usage of classical and quantum resources to include manual or laboratory processes, or other forms of emerging computing, such as analog/digital hybrid computing, DNA computing, optical computing, neuromorphic computing, etc. Laboratory measurement processes that could provide some of the needed values for the full process may also be added to the graph if reasonable estimates of equivalent resources/time/error are available. Additional constraints may be added to the problem formulation to represent parallelization of tasks using splitting of output and input data across edges in the graph. The formulations could be used to minimize the total computation time, to minimize the propagation of error, or to maximize best usage of resources available.

One possible formulation applied to the directed graph network **300** comprises an optimization approach to minimize the total computation time while ensuring that all resources required for the problem are available and also ensuring that the error of the final calculated result is within an acceptable maximum error bound. In this formulation, given initial data *G* and desired final output *H,* the optimization process minimizes total time required:

$$\sum_i t_i$$

subject to, total error of the full process must be less than a maximum acceptable error, $E_{max}$:

$$\prod_i E_i < E_{max}$$

resources used at each node must be available:

$$R_i < R_i^{available}, \forall i$$

first process must use initial data:

$$S_0 = G$$

and final data produced must be the desired final output:

$$U_N = H$$

Alternately, the optimization workflow process may solve the problem to realize the most accurate possible resulting data element, as long as the resources required for each computational sub-task are available and the total computation time is below some acceptable limit. Any reformulation could be created based on constrained combinations of the error rates, resources, and/or time. Therefore, given initial data *G,* and desired final output *H,* the optimization time would minimize total propagated error of the final result:

$$\prod_i E_i$$

subject to, total computational time must be less than a specified upper limit, $t_{max}$:

$$\sum_i t_i < t_{max}$$

resources used at each node must be available:

$$R_i < R_i^{available}, \forall i$$

first process must use initial data:

$$S_0 = G$$

and final data produced must be the desired final output:

$$U_N = H$$

Additionally, a specific formulation of the network problem may be rerun with varying parameters such as, e.g., varying the maximum resources of a particular hardware type available, varying the error rates associated with particular computational sub-tasks available on the graph, etc., to better understand how the optimal choice of an algorithmic stack would transition from one hardware to another based on error. In this manner, running the optimization problem multiple times with varying parameters helps to determine an optimal transition between classical and quantum hardware types.

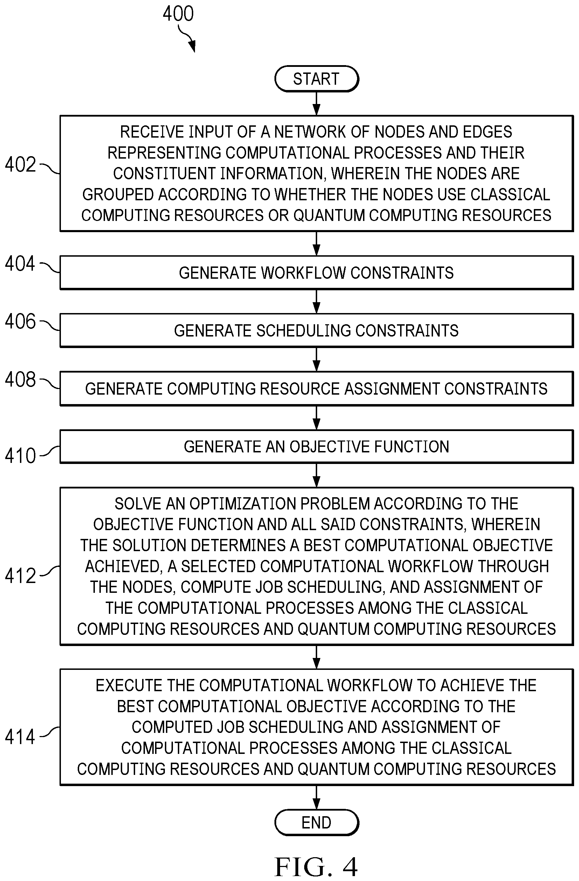

**Figure 4** depicts a flow diagram illustrating a process for network optimization for arranging computational sub-tasks in a hybrid-computing environment. Process flow **400** may be implemented in hybrid-computing resource optimization system **100** shown in **Figure 1** including network optimization solution **120** shown in **Figure 2.**

Process **400** begins by receiving input of a network of nodes and edges representing computational processes and their constituent information, wherein the nodes are grouped according to whether the nodes use classical computing resources or quantum computing resources (operation **402**).

Process **400** then generates workflow constraints (operation **404**). The workflow constraints comprise node and edge activation constraints, node and edge relationship constraints, domain input constraints, domain output constraints, resource constraints; time definition constraints, and total cost constraints.

The node and edge activation constraints, responsive to selection of a process as part of a computational workflow, ensure corollary input data elements and output data elements are also activated as part of the workflow. The node and edge constraints may also comprise node and edge relationship constraints that ensure, responsive to activation of one of a pair of nodes, an edge connecting the pair of nodes is activated.

The node and edge relationship constraints, responsive to activation of one of a pair of nodes, ensure that an edge connecting the pair of nodes is activated.

The domain input constraints and domain output constraints ensure that user specification of available data elements is respected and that target end goals of the computational workflow achieve user specified target data elements. Alternatively, the domain input constraints and domain output constraints assign corresponding data element variables at the start of optimization.

The resource constraints ensure classical and quantum computing resources running on machines are within equipped resources on the machines.

Costs accounted for by the total cost constrains comprise at least one of monetary cost, amount of time, power expended, and error incurred.

Process **400** generates scheduling constraints (operation **406**). The scheduling constraints may comprise scheduling duration constraints and temporal discretization constraints.

Process **400** generates computing resource assignment constraints (operation **408**). The computing resource assignment constraints comprise activity constraints that ensure the activity of machines running the classical and quantum computing resources matches in time to startings and endings of computational processes assigned to those machines.

Process **400** generates an objective function (operation **410**) and then solves an optimization problem according to the objective function and all the above constraints (operation **412**). The solution determines a best computational objective achieved, a selected computational workflow through the nodes, compute job scheduling, and assignment of the computational processes among the classical computing resources and quantum computing resources.

Process **400** executes the computational workflow to achieve the best computational objective according to the computed job scheduling and assignment of computational processes among the classical computing resources and quantum computing resources (operation **414**). Process **400** then ends.

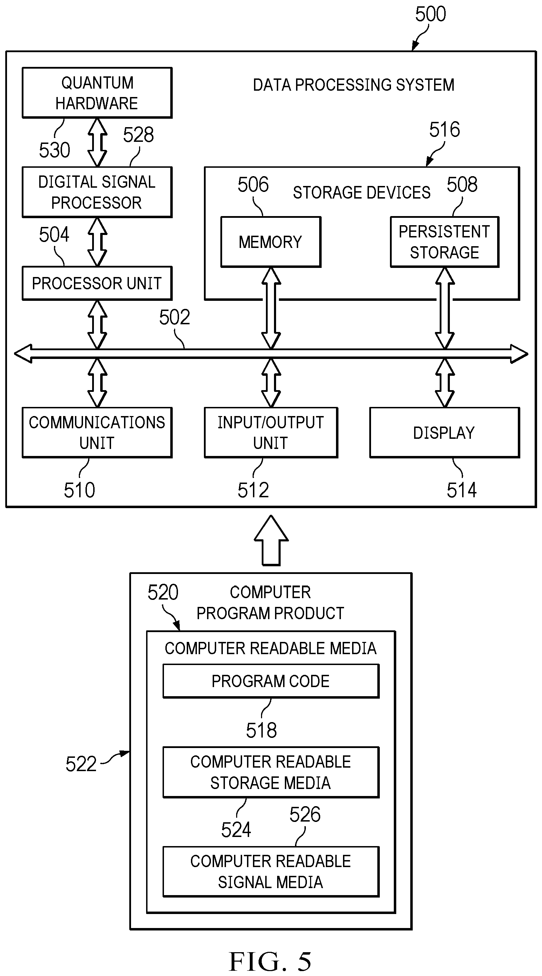

Turning now to **Figure 5,** an illustration of a block diagram of a data processing system is depicted in accordance with an illustrative embodiment. Data processing system might be an example of computer system **150 in Figure 1.** In this illustrative example, data processing system **500** includes communications framework **502,** which provides communications between processor unit **504,** memory **506,** persistent storage **508,** communications unit **510,** input/output unit **512,** and display **514.** In this example, communications framework **502** may take the form of a bus system.

Processor unit **504** serves to execute instructions for software that may be loaded into memory **506.** Processor unit **504** may be a number of processors, a multi-processor core, or some other type of processor, depending on the particular implementation. In an embodiment, processor unit **504** comprises one or more conventional general-purpose central processing units (CPUs). Processor unit **504** may send instructions to and from digital signal processor (DSP) **528.** DSP **528** in turn sends analog or hybrid signals to and from quantum hardware **530.**

Quantum hardware **530** may comprise quantum circuits based on qubits (quantum bits). Qubits are traditionally used to simulate a 1 or 0 state, or in a superposition of the 1 and 0 states. However, when measured, the qubit may be in an infinite number of states depending on the qubit's quantum state immediately prior to measurement when using a Bloch sphere representation. The quantum circuits may comprise a number of reversible quantum gates in which computational processes are logically reversible.

Memory **506** and persistent storage **508** are examples of storage devices **516.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **516** may also be referred to as computer-readable storage devices in these illustrative examples. Memory **506,** in these examples, may be, for example, a random access memory or any other suitable volatile or non-volatile storage device. Persistent storage **508** may take various forms, depending on the particular implementation.

For example, persistent storage **508** may contain one or more components or devices. For example, persistent storage **508** may be a hard drive, a flash memory, a rewritable optical disk, a rewritable magnetic tape, or some combination of the above. The media used by persistent storage **508** also may be removable. For example, a removable hard drive may be used for persistent storage **508.** Communications unit **510,** in these illustrative examples, provides for communications with other data processing systems or devices. In these illustrative examples, communications unit **510** is a network interface card.

Input/output unit **512** allows for input and output of data with other devices that may be connected to data processing system **500.** For example, input/output unit **512** may provide a connection for user input through at least one of a keyboard, a mouse, or some other suitable input device. Further, input/output unit **512** may send output to a printer. Display **514** provides a mechanism to display information to a user.

Instructions for at least one of the operating system, applications, or programs may be located in storage devices **516,** which are in communication with processor unit **504** through communications framework **502.** The processes of the different embodiments may be performed by processor unit **504** using computer-implemented instructions, which may be located in a memory, such as memory **506.**

These instructions are referred to as program code, computer-usable program code, or computer-readable program code that may be read and executed by a processor in processor unit **504.** The program code in the different embodiments may be embodied on different physical or computer-readable storage media, such as memory **506** or persistent storage **508.**

Program code **518** is located in a functional form on computer-readable media **520** that is selectively removable and may be loaded onto or transferred to data processing system **500** for execution by processor unit **504.** Program code **518** and computer-readable media **520** form computer program product **522** in these illustrative examples. Computer program product **522** might be for aligning reference frames for an augmented reality (AR) display. In one example, computer-readable media **520** may be computer-readable storage media **524** or computer-readable signal media **526.**

In these illustrative examples, computer-readable storage media **524** is a physical or tangible storage device used to store program code **518** rather than a medium that propagates or transmits program code **518.** Alternatively, program code **518** may be transferred to data processing system **500** using computer-readable signal media **526.**

Computer-readable signal media **526** may be, for example, a propagated data signal containing program code **518.** For example, computer-readable signal media **526** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **500** are not meant to provide architectural limitations to the manner in which different embodiments may be implemented. The different illustrative embodiments may be implemented in a data processing system including components in addition to or in place of those illustrated for data processing system **500.** Other components shown in **Figure 5** can be varied from the illustrative examples shown. The different embodiments may be implemented using any hardware device or system capable of running program code **518.**

As used herein, a first component "connected to" a second component means that the first component can be connected directly or indirectly to the second component. In other words, additional components may be present between the first component and the second component. The first component is considered to be indirectly connected to the second component when one or more additional components are present between the two components. When the first component is directly connected to the second component, no additional components are present between the two components.

As used herein, the phrase "a number" means one or more. The phrase "at least one of", when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, without limitation, "at least one of item A, item B, or item C" may include item A, item A and item B, or item C. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

According to the present disclosure, a computer-implemented method of network optimization for arranging computational sub-tasks in a hybrid-computing environment, a system for network optimization for arranging computational sub-tasks in a hybrid-computing environment, and a computer program product for network optimization for arranging computational sub-tasks in a hybrid-computing environment as defined in the independent claims are provided. Further embodiments are defined in the dependent claims. Although the scope is only defined by the claims, the below embodiments, examples (worded as Clauses), and aspects are present for aiding in understanding the background and advantages.

Clause 1. A computer-implemented method of network optimization for arranging computational sub-tasks in a hybrid-computing environment, the method comprising: receiving input of a network of nodes and edges representing computational processes and their constituent information, wherein the nodes are grouped according to whether the nodes use classical computing resources or quantum computing resources;

generating workflow constraints;
generating scheduling constraints;
generating computing resource assignment constraints; generating an objective function;
solving an optimization problem according to the objective function and all said constraints, wherein the solution determines a best computational objective achieved, a selected computational workflow through the nodes, compute job scheduling, and assignment of the computational processes among the classical computing resources and quantum computing resources; and executing the computational workflow to achieve the best computational objective according to the computed job scheduling and assignment of computational processes among the classical computing resources and quantum computing resources.

Clause 2. The method of Clause 1, wherein the workflow constraints comprise:

node and edge activation constraints;
node and edge relationship constraints;
domain input constraints;
domain output constraints;
resource constraints;
time definition constraints; and
total cost constraints.

Clause 3. The method of Clause 1 or 2, wherein the node and edge activation constraints, responsive to selection of a process as part of the computational workflow, ensure corollary input data elements and output data elements are also activated as part of the workflow. Clause 4. The method of any of Clauses 1 to 3, wherein the node and edge relationship constraints, responsive to activation of one of a pair of nodes, ensure that an edge connecting the pair of nodes is activated.

Clause 5. The method of any of Clauses 1 to 4, wherein the domain input constraints and domain output constraints ensure that user specification of available data elements is respected and that target end goals of the computational workflow achieve user specified target data elements.

Clause 6. The method of any of Clauses 1 to 5, wherein the domain input constraints and domain output constraints assign corresponding data element variables at the start of optimization.

Clause 7. The method of any of Clauses 1 to 6, wherein the resource constraints ensure classical and quantum computing resources running on machines are within equipped resources on the machines.

Clause 8. The method of any of Clauses 1 to 7, wherein costs comprise at least one of:

monetary cost;
amount of time;
power expended; or
error incurred.

Clause 9. The method of any of Clauses 1 to 8, wherein the scheduling constraints comprise:

scheduling duration constraints; and
temporal discretization constraints.

Clause 10. The method of any of Clauses 1 to 9, wherein the computing resource assignment constraints comprise activity constraints that ensure the activity of machines running the classical and quantum computing resources matches in time to startings and endings of computational processes assigned to those machines.

Clause 11. A system for network optimization for arranging computational sub-tasks in a hybrid-computing environment, the system comprising:

a storage device that stores program instructions;
one or more processors operably connected to the
storage device and configured to execute the program instructions to cause the system to:
receive input of a network of nodes and edges representing computational processes and their constituent information, wherein the nodes are grouped according to whether the nodes use classical computing resources or quantum computing resources;

generate workflow constraints;

generate scheduling constraints;

generate computing resource assignment constraints;

generate an objective function;

solve an optimization problem according to the objective function and all said constraints, wherein the solution determines a best computational objective achieved, a selected computational workflow through the nodes, compute job scheduling, and assignment of the computational processes among the classical computing resources and quantum computing resources; and

execute the computational workflow to achieve the best computational objective according to the computed job scheduling and assignment of computational processes among the classical computing resources and quantum computing resources.

Clause 12. The system of Clause 11, wherein the workflow constraints comprise:

node and edge activation constraints;
node and edge relationship constraints;
domain input constraints;
domain output constraints;
resource constraints;
time definition constraints; and
total cost constraints.

Clause 13. The system of Clause 11 or 12, wherein the node and edge activation constraints, responsive to selection of a process as part of the computational workflow, ensure corollary input data elements and output data elements are also activated as part of the workflow. Clause 14. The system of Clause 11, 12, or 13 wherein the node and edge relationship constraints, responsive to activation of one of a pair of nodes, ensure that an edge connecting the pair of nodes is activated.

Clause 15. The system of any of Clauses 11 to 14, wherein the domain input constraints and domain output constraints ensure that user specification of available data elements is respected and that target end goals of the computational workflow achieve user specified target data elements.

Clause 16. The system of any of Clauses 11 to 15, wherein the domain input constraints and domain output constraints assign corresponding data element variables at the start of optimization.

Clause 17. The system of any of Clauses 11 to 16, wherein the resource constraints ensure classical and quantum computing resources running on machines are within equipped resources on the machines.

Clause 18. The system of any of Clauses 11 to 17, wherein costs comprise at least one of:

monetary cost;
amount of time;
power expended; or
error incurred.

Clause 19. The system of any of Clauses 11 to 18, wherein the scheduling constraints comprise:

scheduling duration constraints; and
temporal discretization constraints.

Clause 20. The system of any of Clauses 11 to 19, wherein the computing resource assignment constraints comprise activity constraints that ensure the activity of machines running the classical and quantum computing resources matches in time to startings and endings of computational processes assigned to those machines.

Clause 21. A computer program product for network optimization for arranging computational sub-tasks in a hybrid-computing environment, the computer program product comprising:

a computer-readable storage medium having program instructions embodied thereon to perform the steps of:

receiving input of a network of nodes and edges representing computational processes and their constituent information, wherein the nodes are grouped according to whether the nodes use classical computing resources or quantum computing resources;
generating workflow constraints;
generating scheduling constraints;
generating computing resource assignment constraints;
generating an objective function;
solving an optimization problem according to the objective function and all said constraints, wherein the solution determines a best computational objective achieved, a selected computational workflow through the nodes, compute job scheduling, and assignment of the computational processes among the classical computing resources and quantum computing resources; and executing the computational workflow to achieve the best computational objective according to the computed job scheduling and assignment of computational processes among the classical computing resources and quantum computing resources.

## Claims

1. A computer-implemented method of network optimization for arranging computational sub-tasks in a hybrid-computing environment, the method comprising:

   receiving input (402) of a network of nodes and edges representing computational processes and their constituent information, wherein the nodes are grouped according to whether the nodes use classical computing resources or quantum computing resources;
   generating workflow constraints (404);
   generating scheduling constraints (406);
   generating computing resource assignment constraints (408) ;
   generating an objective function (410);
   solving an optimization problem (412) according to the objective function and all said constraints, wherein the solution determines a best computational objective achieved, a selected computational workflow through the nodes, compute job scheduling, and assignment of the computational processes among the classical computing resources and quantum computing resources; and
   executing the computational workflow (414) to achieve the best computational objective according to the computed job scheduling and assignment of computational processes among the classical computing resources and quantum computing resources.

2. The method of claim 1, wherein the workflow constraints comprise:

   node and edge activation constraints (214);
   node and edge relationship constraints (216);
   domain input constraints (218);
   domain output constraints (220);
   resource constraints (226);
   time definition constraints (230); and
   total cost constraints (232).

3. The method of claim 2, wherein the node and edge activation constraints, responsive to selection of a process as part of the computational workflow, ensure corollary input data elements and output data elements are also activated as part of the workflow.

4. The method of claim 2 or 3, wherein the node and edge relationship constraints, responsive to activation of one of a pair of nodes, ensure that an edge connecting the pair of nodes is activated.

5. The method of claim 2, 3 or 4, wherein the domain input constraints and domain output constraints ensure that user specification of available data elements is respected and that target end goals of the computational workflow achieve user specified target data elements.

6. The method of any of claims 2 to 5, wherein the domain input constraints and domain output constraints assign corresponding data element variables at the start of optimization.

7. The method of any of claims 2 to 6, wherein the resource constraints ensure classical and quantum computing resources running on machines are within equipped resources on the machines.

8. The method of any of claims 2 to 7, wherein costs comprise at least one of:

   monetary cost;
   amount of time;
   power expended; or
   error incurred.

9. The method of any of claims 1 to 8, wherein the scheduling constraints comprise:

   scheduling duration constraints (222); and
   temporal discretization constraints (224).

10. The method of any of claims 1 to 9, wherein the computing resource assignment constraints comprise activity constraints (226) that ensure the activity of machines running the classical and quantum computing resources matches in time to startings and endings of computational processes assigned to those machines.

11. A system for network optimization for arranging computational sub-tasks in a hybrid-computing environment, the system comprising:

   a storage device (516) that stores program instructions;
   one or more processors (504, 528) operably connected to the storage device and configured to execute the program instructions to cause the system to:

      receive input (402) of a network of nodes and edges representing computational processes and their constituent information, wherein the nodes are grouped according to whether the nodes use classical computing resources or quantum computing resources;
      generate workflow constraints (404);
      generate scheduling constraints (406);
      generate computing resource assignment constraints (408) ;
generate an objective function (410);
solve an optimization problem (412) according to the objective function and all said constraints, wherein the solution determines a best computational objective achieved, a selected computational workflow through the nodes, compute job scheduling, and assignment of the computational processes among the classical computing resources and quantum computing resources; and
execute the computational workflow (414) to achieve the best computational objective according to the computed job scheduling and assignment of computational processes among the classical computing resources and quantum computing resources.

12. The system of claim 11, wherein the workflow constraints comprise:

    node and edge activation constraints (214);
    node and edge relationship constraints (216);
    domain input constraints (218);
    domain output constraints (220);
    resource constraints (226);
    time definition constraints (230); and
    total cost constraints (232).

13. The system of claim 12, wherein the node and edge activation constraints, responsive to selection of a process as part of the computational workflow, ensure corollary input data elements and output data elements are also activated as part of the workflow.

14. The system of claim 12, wherein the node and edge relationship constraints, responsive to activation of one of a pair of nodes, ensure that an edge connecting the pair of nodes is activated; preferably

    a) wherein the domain input constraints and domain output constraints ensure that user specification of available data elements is respected and that target end goals of the computational workflow achieve user specified target data elements; and/or
    b) wherein the domain input constraints and domain output constraints assign corresponding data element variables at the start of optimization; and/or
    c) wherein the resource constraints ensure classical and quantum computing resources running on machines are within equipped resources on the machines; and/or
    d) wherein costs comprise at least one of:

monetary cost;
amount of time;
power expended; or
error incurred; and/or

e) wherein the scheduling constraints comprise:

    scheduling duration constraints (222); and
    temporal discretization constraints (224); and/or

f) wherein the computing resource assignment constraints comprise activity constraints (226) that ensure the activity of machines running the classical and quantum computing resources matches in time to startings and endings of computational processes assigned to those machines.

15. A computer program product for network optimization for arranging computational sub-tasks in a hybrid-computing environment, the computer program product comprising:

    a computer-readable storage medium (524) having program instructions embodied thereon which when executed by a computer causes the computer to perform the steps as defined in claim 1.

**COMPUTER SYSTEM** <u>150</u>

**HYBRID-COMPUTING RESOURCE OPTIMIZING SYSTEM** <u>100</u>

**INPUT SET** <u>102</u>

104 — COMPUTATIONAL SUB-TASK NODES

106 — COMPUTATIONAL OBJECTIVE

108 — ADDITIONAL CONSTRAINTS

110 — INITIAL DATA INPUTS

112 — DESIRED FINAL OUTPUTS

**RESOURCE REQUIREMENTS CALCULATOR** <u>114</u>

116 — NETWORK GENERATOR

118 — NETWORK EDGE GENERATOR

120 — NETWORK OPTIMIZATION SOLUTION

122 — RESULTS EXTRACTOR

**OUTPUT SET** <u>124</u>

126 — OPTIMAL PATH AND NODES TRAVERSED

128 — OPTIMAL OBJECTIVE DETERMINED

130 — ESTIMATED REQUIREMENTS

152 — PROCESSORS

## FIG. 1

# FIG. 2

**NETWORK OPTIMIZATION SOLUTION** <u>120</u>

## INPUT SET <u>202</u>

| DATA NODES | COMPUTE NODES | DATA FLOW EDGES | RELATIONSHIPS |
|---|---|---|---|
| 204 | 206 | 208 | 210 |

## WORKFLOW <u>212</u>

214 — GENERATE NODE/EDGE ACTIVATION CONSTRAINTS

238 — TEMPORAL DISCRETIZATION SCHEME

216 — GENERATE NODE/EDGE RELATIONSHIP CONSTRAINTS

224 — GENERATE TEMPORAL DISCRETIZATION CONSTRAINTS

230 — GENERATE TIME DEFINITION CONSTRAINTS

218 — GENERATE DOMAIN INPUT CONSTRAINTS

226 — GENERATE ACTIVITY MATRIX CONSTRAINTS

232 — GENERATE TOTAL COST CONSTRAINTS

220 — GENERATE DOMAIN OUTPUT CONSTRAINTS

GENERATE RESOURCE MATRIX CONSTRAINTS — 228

234 — GENERATE OBJECTIVE FUNCTION

222 — GENERATE SCHEDULING DURATION CONSTRAINTS

236 — SOLVE OPTIMIZATION PROBLEM

## OUTPUT SET <u>240</u>

| BEST COMPUTATIONAL WORKFLOW | OBJECTIVE EVALUATION | COMPUTE JOB SCHEDULING | RESOURCE ASSIGNMENT |
|---|---|---|---|
| 242 | 244 | 246 | 248 |

FIG. 3

400

```
                    ┌─────────┐
                    │  START  │
                    └─────────┘
                         │
                         ▼
┌──────────────────────────────────────────────────────┐
│  RECEIVE INPUT OF A NETWORK OF NODES AND EDGES         │
│  REPRESENTING COMPUTATIONAL PROCESSES AND THEIR        │
402│  CONSTITUENT INFORMATION, WHEREIN THE NODES ARE     │
│  GROUPED ACCORDING TO WHETHER THE NODES USE CLASSICAL  │
│  COMPUTING RESOURCES OR QUANTUM COMPUTING RESOURCES    │
└──────────────────────────────────────────────────────┘
                         │
                         ▼
┌──────────────────────────────────────────────────────┐
404│            GENERATE WORKFLOW CONSTRAINTS            │
└──────────────────────────────────────────────────────┘
                         │
                         ▼
┌──────────────────────────────────────────────────────┐
406│           GENERATE SCHEDULING CONSTRAINTS           │
└──────────────────────────────────────────────────────┘
                         │
                         ▼
┌──────────────────────────────────────────────────────┐
408│  GENERATE COMPUTING RESOURCE ASSIGNMENT CONSTRAINTS │
└──────────────────────────────────────────────────────┘
                         │
                         ▼
┌──────────────────────────────────────────────────────┐
410│            GENERATE AN OBJECTIVE FUNCTION           │
└──────────────────────────────────────────────────────┘
                         │
                         ▼
┌──────────────────────────────────────────────────────┐
│  SOLVE AN OPTIMIZATION PROBLEM ACCORDING TO THE        │
│  OBJECTIVE FUNCTION AND ALL SAID CONSTRAINTS, WHEREIN  │
│  THE SOLUTION DETERMINES A BEST COMPUTATIONAL OBJECTIVE │
412│  ACHIEVED, A SELECTED COMPUTATIONAL WORKFLOW THROUGH │
│  THE NODES, COMPUTE JOB SCHEDULING, AND ASSIGNMENT OF  │
│  THE COMPUTATIONAL PROCESSES AMONG THE CLASSICAL       │
│  COMPUTING RESOURCES AND QUANTUM COMPUTING RESOURCES   │
└──────────────────────────────────────────────────────┘
                         │
                         ▼
┌──────────────────────────────────────────────────────┐
│  EXECUTE THE COMPUTATIONAL WORKFLOW TO ACHIEVE THE     │
│  BEST COMPUTATIONAL OBJECTIVE ACCORDING TO THE         │
│  COMPUTED JOB SCHEDULING AND ASSIGNMENT OF             │
414│  COMPUTATIONAL PROCESSES AMONG THE CLASSICAL        │
│  COMPUTING RESOURCES AND QUANTUM COMPUTING RESOURCES   │
└──────────────────────────────────────────────────────┘
                         │
                         ▼
                    ┌─────────┐
                    │   END   │
                    └─────────┘
```

FIG. 4

500

DATA PROCESSING SYSTEM

QUANTUM
HARDWARE

530  528

DIGITAL SIGNAL
PROCESSOR

504

PROCESSOR UNIT

502

516

STORAGE DEVICES

506                                      508

MEMORY

PERSISTENT
STORAGE

COMMUNICATIONS
UNIT

510

INPUT/OUTPUT
UNIT

512

DISPLAY

514

COMPUTER
PROGRAM PRODUCT

520

COMPUTER READABLE MEDIA

PROGRAM CODE

518

COMPUTER READABLE
STORAGE MEDIA

522

524  526

COMPUTER READABLE
SIGNAL MEDIA

FIG. 5

# EUROPEAN SEARCH REPORT

**Application Number**

EP 25 16 1776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2023 202 980 A1 (THE BOEING COMPANY) 7 December 2023 (2023-12-07) * abstract * * paragraphs [0004] - [0006], [0020], [0026] - [0029], [0031], [0034], [0042], [0045] - [0046], [0083] * ----- | 1-15 | INV. G06F9/48 G06F9/50 |
| X | US 2023/229514 A1 (DELL PRODUCTS L.P.) 20 July 2023 (2023-07-20) * abstract * * paragraphs [0001], [0017] - [0018], [0020], [0024] - [0025], [0028] - [0030], [0050] * ----- | 1-15 | |
| X | AJAGEKAR, AL HAMOUD, YOU: "Hybrid Classical-Quantum Optimization Techniques for Solving Mixed-Integer Programming Problems in Production Scheduling", IEEE TRANSACTIONS ON QUANTUM ENGINEERING, vol. 3, 28 June 2022 (2022-06-28), pages 1-16, XP011915203, [retrieved on 2022-06-29] * abstract * ----- | 1-15 | |
| A | CA 3 233 333 A1 (AGNOSTIQ INC.) 13 April 2023 (2023-04-13) * the whole document * ----- | 1-15 | TECHNICAL FIELDS SEARCHED (IPC)  G06F |
| A | PAKHOMCHIK, YUDIN, PERELSHTEIN, ALEKSEYENKO, YARKONI: "Solving workflow scheduling problems with QUBO modeling", CORNELL UNIVERSITY LIBRARY, 10 May 2022 (2022-05-10), XP091223782, * the whole document * ----- | 1-15 | |

The present search report has been drawn up for all claims

| Place of search | Date of completion of the search | Examiner |
|---|---|---|
| The Hague | 16 July 2025 | Tomàs Blanch, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1776

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2025

| Patent document cited in search report | | Publication date | Patent family member(s) | | Publication date |
|---|---|---|---|---|---|
| AU 2023202980 | A1 | 07-12-2023 | AU | 2023202980 A1 | 07-12-2023 |
| | | | CN | 117093337 A | 21-11-2023 |
| | | | EP | 4280059 A1 | 22-11-2023 |
| | | | KR | 20230161898 A | 28-11-2023 |
| | | | US | 2023376354 A1 | 23-11-2023 |
| US 2023229514 | A1 | 20-07-2023 | NONE | | |
| CA 3233333 | A1 | 13-04-2023 | CA | 3233333 A1 | 13-04-2023 |
| | | | US | 2024394414 A1 | 28-11-2024 |
| | | | WO | 2023056565 A1 | 13-04-2023 |

EPO FORM P0459

For more details about this annex : see Official Journal of the European Patent Office, No. 12/82